(19) Europäisches Patentamt / European Patent Office / Office européen des brevets

(11) **EP 4 535 213 A1**

(12) **EUROPEAN PATENT APPLICATION**

(43) Date of publication:
09.04.2025 Bulletin 2025/15

(21) Application number: 23306709.9

(22) Date of filing: 05.10.2023

(51) International Patent Classification (IPC):
$G06F\ 30/12^{(2020.01)}$    $G06F\ 30/27^{(2020.01)}$
$G06N\ 3/08^{(2023.01)}$    $G06V\ 10/82^{(2022.01)}$

(52) Cooperative Patent Classification (CPC):
G06V 10/82; G06F 18/2413; G06F 30/12;
G06F 30/27; G06N 3/045; G06N 3/08;
G06V 10/426; G06V 10/454; G06V 10/764;
G06V 10/774; G06V 10/84; G06V 20/64;
G06V 40/171; G06F 2119/18

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Dassault Systèmes**
78140 Vélizy-Villacoublay (FR)

(72) Inventors:
• **Clarou, Pierre**
78140 Vélizy-Villacoublay (FR)
• **Mezghanni, Mariem**
78140 Vélizy-Villacoublay (FR)
• **Boucher, Julien**
78140 Vélizy-Villacoublay (FR)

(74) Representative: **Bandpay & Greuter**
**11 rue Christophe Colomb**
**75008 Paris (FR)**

(54) **MACHINE-LEARNING FOR LOCAL TOPOLOGICAL SIMILARITY RETRIEVAL**

(57) The disclosure concerns a machine-learning method. The method comprises obtaining a training dataset of B-rep graphs. Each B-rep graph represents a respective B-rep. Each B-rep graph comprises graph nodes each representing an edge, a face or a co-edge of the respective B-rep and being associated with one or more geometrical and/or topological features. Each B-rep graph further comprises graph edges each between a respective first graph node representing a respective co-edge and a respective second graph node representing a face, an edge, an adjacent co-edge, or a mating co-edge associated with the respective co-edge. The method further comprises learning, based on the training dataset, a local Deep CAD neural network. The local Deep CAD neural network is configured to take as input a B-rep graph and to output, for each graph node of the input B-rep graph, a local topological signature of the B-rep element represented by the graph node.

**Description**

**TECHNICAL FIELD**

The disclosure relates to the field of computer programs and systems, and more specifically to a method, system and program for machine-learning.

**BACKGROUND**

A number of systems and programs are offered on the market for the design, the engineering and the manufacturing of objects. CAD is an acronym for Computer-Aided Design, e.g. it relates to software solutions for designing an object. CAE is an acronym for Computer-Aided Engineering, e.g. it relates to software solutions for simulating the physical behavior of a future product. CAM is an acronym for Computer-Aided Manufacturing, e.g. it relates to software solutions for defining manufacturing processes and operations. In such computer-aided design systems, the graphical user interface plays an important role as regards the efficiency of the technique. These techniques may be embedded within Product Lifecycle Management (PLM) systems. PLM refers to a business strategy that helps companies to share product data, apply common processes, and leverage corporate knowledge for the development of products from conception to the end of their life, across the concept of extended enterprise. The PLM solutions provided by Dassault Systèmes (under the trademarks CATIA, ENOVIA and DELMIA) provide an Engineering Hub, which organizes product engineering knowledge, a Manufacturing Hub, which manages manufacturing engineering knowledge, and an Enterprise Hub which enables enterprise integrations and connections into both the Engineering and Manufacturing Hubs. All together the system delivers an open object model linking products, processes, resources to enable dynamic, knowledge-based product creation and decision support that drives optimized product definition, manufacturing preparation, production and service.

Within this context and other contexts, there is a need for improved solutions for CAD object retrieval and topological similarity evaluation between CAD objects.

European Patent Application EP22306233.2, filed by Dassault Systèmes on 17 August 2022 provides for a method of machine-learning of a Deep CAD neural network that forms an improved solution for CAD object retrieval, the learnt Deep CAD neural network being trained to encode a B-rep graph into a compact topological signature vector of an input B-rep, the signature capturing the topology of the B-rep. This neural network is thereby usable for CAD object retrieval or topological similarity evaluation between CAD objects. However, this Deep CAD neural network although already improving CAD model retrieval and topological similarity evaluation between CAD objects, computes topological signatures that represent the topology of a whole input B-rep, i.e. global topological signatures that represent the global topology of the B-rep.

It is an object of the present disclosure to provide a machine-learning solution to compute local topological signatures of B-reps.

**SUMMARY**

It is therefore provided a computer-implemented method of machine-learning. The method comprises obtaining a training dataset of B-rep graphs. Each B-rep graph represents a respective B-rep. Each B-rep graph comprises graph nodes each representing an edge, a face or a co-edge of the respective B-rep and being associated with one or more geometrical and/or topological features. Each B-rep graph further comprises graph edges each between a respective first graph node representing a respective co-edge and a respective second graph node representing a face, an edge, an adjacent co-edge, or a mating co-edge associated with the respective co-edge. The method further comprises learning, based on the training dataset, a local Deep CAD neural network. The local Deep CAD neural network is configured to take as input a B-rep graph and to output, for each graph node of the input B-rep graph, a local topological signature of the B-rep element represented by the graph node.

The method may comprise one or more of the following features:

- obtaining the training dataset of B-rep graphs comprises:

  ○ for each initial B-rep model of a set of initial B-rep models, performing one or more of the following transformations:

    ▪ Face geometry modification,
    ▪ Edge geometry modification,
    ▪ Face removal,

- Edge removal, and/or
- Pad or hole addition on a face,

the training dataset consisting in pairs of B-rep graphs each including the B-rep graph of an initial B-rep and the B-rep graph of the B-rep resulting from the one or more transformations applied to the initial B-rep, and learning the Deep CAD neural network comprises minimizing a loss that, for pairs of elements each of an initial B-rep, penalizes:

○ a discrepancy between two similarities each between a local signature outputted by the neural network for one element of the pair and a local signature outputted by the neural network for the corresponding element in the B-rep resulting from the one or more transformations applied to the initial B-rep; and

○ a discrepancy between two distances each respective to one element of the pair and the corresponding element in the B-rep resulting from the one or more transformations applied to the initial B-rep and measuring a distance between said corresponding element and a closest modified element in said B-rep resulting from the one or more transformations applied to the initial B-rep;

- the loss is of the type:

$$loss\left(X_{F_1}^K, X_{F_1'}^K, DME_{F_1/F_1'}, X_{F_2}^K, X_{F_2'}^K, DME_{F_2/F_2'}\right)$$
$$= max(0, -sign(DME_{F_1/F_1'}$$
$$- DME_{F_2/F_2'})\left(sim\left(X_{F_1}^K, X_{F_1'}^K\right) - sim\left(X_{F_2}^K, X_{F_2'}^K\right)\right)$$
$$+ margin\left|DME_{F_1/F_1'} - DME_{F_2/F_2'}\right|)$$

where:

○ ($F_1$; $F_2$) is a pair of B-rep elements $F_1$ and $F_2$ of an initial B-rep;

○ $F_1'$ and $F_2'$ are the elements corresponding to $F_1$ and $F_2$, respectively, in the B-rep resulting from the one or more transformations applied to the initial B-rep;

○ $DME_{F_1/F_1'}$ is the distance between $F_1'$ and a closest modified element in the B-rep resulting from the one or more transformations applied to the initial B-rep;

○ $DME_{F_2/F_2'}$ is the distance between $F_2'$ and a closest modified element in the B-rep resulting from the one or more transformations applied to the initial B-rep;

○ $X_{F_1}^K, X_{F_1'}^K, X_{F_2}^K$, and $X_{F_2'}^K$ are the local signatures of $F_1$, $F_1'$, $F_2$ and $F_2'$, respectively;

○ *margin* is a constant; and

○ *sim* is a function measuring a similarity between two vectors;

- *sim* is the cosine similarity function;
- the distance between an element of an initial B-rep and a corresponding element in the B-rep resulting from the one or more transformations applied to the initial B-rep is the length, in the B-rep graph of the B-rep resulting from the one or more transformations applied to the initial B-rep, of a path between the corresponding element and a closest modified element in the B-rep resulting from the one or more transformations applied to the initial B-rep;
- the local Deep CAD neural network comprises a convolution unit that is configured to perform a kernel concatenation that concatenates a feature vector of each co-edge with the feature vectors of its neighboring B-rep elements according to a kernel of the neural network;
- the convolution unit is further configured to pass each concatenated feature vector of a co-edge resulting from the kernel concatenation as input to a dense neural network;
- the convolution unit is further configured to compute, for each vector outputted by the dense neural network for an input concatenated feature vector of a co-edge, a new edge feature vector, a new face feature vector, and a new co-edge feature vector;
- the dense neural network outputs, for an input concatenated feature vector $\phi_c^{(i)}$ of a co-edge c resulting from the kernel concatenation:

$$\psi_c^{(i)} = MLP\left(\phi_c^{(i)}\right) = \left[\, \psi_{CC}^{(i)} \,\middle|\, \psi_{CF}^{(i)} \,\middle|\, \psi_{CE}^{(i)} \,\right],$$

where $\psi_{CC}^{(i)}$, $\psi_{CF}^{(i)}$, $\psi_{CE}^{(i)}$ have the same dimension h such that the dimension of $\psi_c^{(i)}$ is 3*h, and wherein each co-edge c, each face F, and each edge F, the new feature vectors are,

$$\begin{cases} X_c^{(i+1)} = \psi_{CC}^{(i)} \\ X_E^{(i+1)} = MaxPool(\psi_{CE1}^{(i)}, \psi_{CE2}^{(i)}) \\ X_F^{(i+1)} = MaxPool(\psi_{CF1}^{(i)}, \dots, \psi_{CFk}^{(i)}) \end{cases}$$

where:

- $X_c^{(i+1)}$ is the computed new co-edge feature for the output $\psi_c^{(i)}$ of the dense neural network for co-edge c;

- $X_E^{(i+1)}$ is the computed new edge feature for edge F where $\psi_{CE1}^{(i)}$ and $\psi_{CE2}^{(i)}$ correspond to the feature vectors of its two associated co-edges;

- $X_F^{(i+1)}$ is the computed new face feature for face F where $\psi_{CF1}^{(i)}, \dots, \psi_{CFk}^{(i)}$ correspond to the features of its $k$ associated co-edges, and/or

- the local Deep CAD neural network is configured to apply the convolution unit repeatedly a predetermined number of times.

It is further provided a neural network learnable according to the method, that is a computer-implemented neural network data structure having the weights of a neural network learnt by the method. The provided neural network may for example have been learnt directly by the method, with its weights having been fixed by the learning step of the method.

It is further provided a method of use of the neural network. The method of use comprises obtaining a B-rep graph representing a B-rep. The method of use further comprises applying the neural network to the B-rep graph, thereby obtaining local topological signatures of elements of the B-rep.

It is further provided a computer program comprising instructions for performing the method and/or the method of use.

It is further provided a computer readable storage medium having recorded thereon the computer program and/or the neural network.

It is further provided a computer system comprising a processor coupled to a memory, the memory having recorded thereon the computer program and/or the neural network.

It is further provided a device comprising a data storage medium having recorded thereon the computer program and/or the neural network.

The device may form or serve as a non-transitory computer-readable medium, for example on a SaaS (Software as a service) or other server, or a cloud based platform, or the like. The device may alternatively comprise a processor coupled to the data storage medium. The device may thus form a computer system in whole or in part (e.g. the device is a subsystem of the overall system). The system may further comprise a graphical user interface coupled to the processor.

## BRIEF DESCRIPTION OF THE DRAWINGS

Non-limiting examples will now be described in reference to the accompanying drawings, where:

- FIG. 1 to 10 illustrate the methods; and

- FIG. 11 shows an example of the system.

**DETAILED DESCRIPTION**

It is proposed a computer-implemented method of machine-learning. The method comprises obtaining a training dataset of B-rep graphs. Each B-rep graph represents a respective B-rep. Each B-rep graph comprises graph nodes each representing an edge, a face or a co-edge of the respective B-rep and being associated with one or more geometrical and/or topological features. Each B-rep graph further comprises graph edges each between a respective first graph node representing a respective co-edge and a respective second graph node representing a face, an edge, an adjacent co-edge, or a mating co-edge associated with the respective co-edge. The method further comprises learning, based on the training dataset, a local Deep CAD neural network. The local Deep CAD neural network is configured to take as input a B-rep graph and to output, for each graph node of the input B-rep graph, a local topological signature of the B-rep element represented by the graph node. The method may be referred to as "the learning method".

The learning method forms an improved solution for CAD model topological similarity evaluation.

Notably, the learning method learns a local Deep CAD neural network configured to take as input a B-rep graph, that is a graph capturing the topology of a B-rep model (i.e. boundary representation model) of a product, and to compute, for each graph node of the input B-rep graph, a local topological signature of the B-rep element represented by the graph node. Each local topological signature of the element is a vector (for example of dimension D=128) outputted by the local Deep CAD neural network further to the processing of the input B-rep graph by the neural network's layers, and thereby forms a vector representation of this element of the input B-rep graph. Now, such a vector is obtained by the local Deep CAD neural network's layers processing the input B-rep graph. Such a graph represents both the geometry and the topology of a B-rep, in particular at a local level (*i.e.* at the level of each element of the B-rep), as it comprises graph nodes representing the elements of the B-rep (edge, face, co-edge) and graph edges representing the topological relationships between the elements represented by the nodes connected by the edges. The graph also comprises topological and/or geometrical features of the underlying B-rep, that is feature vectors encapsulating topological and/or geometrical information. The input B-rep graph is in other words a data structure that describes the geometry and topology of the B-rep, in particular at a local level, and the local Deep CAD neural network learnt by the method takes such graph as input and extract thereof local topological signature of the elements of the input B-rep graph (because the network is trained/learnt to do so). In other words, the learning method learns a neural network configured to encode a B-rep graph into a set of compact local topological signature vectors of the B-rep elements capturing the topologies of these elements, and thus the local topologies of the B-rep.

The learning method and the local Deep CAD neural network differ in particular from the method and Deep CAD neural network disclosed in previously cited European Patent Application EP22306233.2 in that the local Deep CAD neural network is trained by the method to output local topological signatures each representing the local topology of a respective element of the B-rep represented by the input graph. The Deep CAD neural network disclosed in previously cited European Patent Application EP22306233.2 was trained by the learning-method therein to output a global topological signature representing the global topology of a B-rep represented by an input B-rep graph.

The learning method may thereby be used for local CAD object retrieval (that is, the retrieval of local parts of CAD objects) or local similarity evaluation between CAD objects (that is the evaluation of similarity between local parts of the CAD objects or within a same CAD objects), or more generally for local manipulation of CAD objects through the use of their local topological signatures. In other words, the learnt local Deep CAD neural network is usable for such tasks. Indeed, a CAD model or object is a feature-based object represented by a feature tree from which a B-rep representation of the model may be generated (i.e. by executing the feature tree). The neural network is trained to find the topological signatures of the local elements of such CAD model and thus allows manipulation of the local elements of the CAD model through the use of their signatures.

The neural network may for example be used to find the local signatures of two elements of a single CAD model or of two CAD models so as to compare them and to assess a topological similarity between them, and thus a local topological similarity between two CAD models or within a single CAD model. This may for example be used for searching a CAD model local element (e.g. a face) in a CAD model database already comprising the local topological signatures of the elements of the CAD models of the database: for a given local element of a CAD model of interest, the learnt neural network may be used to extract the topological signature of the element and to query the database based on this signature. This allows the retrieval of CAD model elements in the database having the topological signatures the closest to that of the given CAD model. Such retrieval may be used during CAD model design (i.e. design of a CAD model representing a manufacturing product, which may be manufactured downstream to the method) to carry out a fast replacement of a CAD model local part by a topologically similar one, as using the signature allows a fast query of the database and thus a fast and efficient retrieval of similar CAD model elements. The local topological signatures indeed form a representation of CAD model element that costs less, in terms of memory requirements (storage, memory footprint) and in terms of CPU resources during use/manipulation, than the corresponding B-rep model or graph, which makes the local topological signatures a computer object allowing for CPU-efficient and memory-efficient manipulation of CAD models. Each local signature may for example be a vector of relatively small dimension (for example 64 or 128), while yet providing good performances as the input B-rep graph is accurate topologically. The method is thereby in other words a machine-learning method for finding local compact topological vector representations of local elements of a given B-rep that is more efficient, in terms of memory and CPU, for manipulation, than the B-rep itself.

The learnt neural network may also be used to detect, in a single B-rep model, the elements of the B-rep (e.g. the faces) having a same or similar topological signature. For example, the neural network may be used to compute all the local topological signatures of the elements of the B-rep (e.g. the faces), based on which the elements having the local topological signatures which are the most similar (e.g. in terms of the value of a cosine similarity for example) to the signatures of a given element can be identified.

The method and the method of use also provide for the following advantages:

- Fast queries using local topological signatures in a database of such signatures are allowed;
- Space efficiency: signatures are lightweight;
- The method leverages unlabeled B-rep datasets on which to learn;
- The use of deep-learning on B-rep-graphs for automatic local topologically aware retrieval. The advantage of working directly on such a format is to avoid any loss of geometric information (due to approximation) or topological information discarding.

The learning method is for machine learning.

As known per se from the field of machine-learning, the processing of an input by a neural network includes applying operations to the input, the operations being defined by data including weight values. Learning a neural network thus includes determining values of the weights based on a dataset configured for such learning, such a dataset being possibly referred to as a learning dataset or a training dataset. For that, the dataset includes data pieces each forming a respective training sample. The training samples represent the diversity of the situations where the neural network is to be used after being learnt. Any training dataset herein may comprise a number of training samples higher than 1000, 10000, 100000, or 1000000. In the context of the present disclosure, by "learning a neural network based on a dataset", it is meant that the dataset is a learning/training dataset of the neural network, based on which the values of the weights (also referred to as "parameters") are set.

In the context of the learning method, the training dataset is the provided dataset of B-rep graphs, which is now discussed. This does not however exclude any pre-processing of this dataset prior to the learning/training. Prior to the discussion on the providing of the dataset, data structures involved therein are now discussed.

"B-rep", also referred to as "B-Rep", stands for "Boundary Representation". B-rep is, in CAD applications, the most common type of modeling. B-rep is a mathematically precise representation of a 3D object. This representation defines a solid as a collection of connected surface elements, which define the boundary between interior and exterior points. There are two types of information in a B-rep: topological components and geometric definitions for those components. Topological components comprise vertices, edges and faces defining 3D object surface, and the connections between them. In addition to connectivity, topological information also includes orientation of edges and face, while, geometric information consists usually of mathematical equations describing vertices, edges and faces (points, curves and surfaces respectively).

The B-rep (i.e. boundary representation) is a 3D representation of a mechanical part. Specifically, the B-rep is a persistent data representation describing the 3D modeled object representing the mechanical part. The B-rep may be the result of computations and/or a series of operations carried out during a designing phase of the 3D modeled object representing the mechanical part. The shape of the mechanical part displayed on the screen of the computer when the modeled object is represented is (e.g. a tessellation of) the B-rep. In examples, the B-rep represents a part of the model object.

A B-Rep includes topological entities and geometrical entities. Topological entities are: face, edge, and vertex. Geometrical entities are 3D objects: surface, plane, curve, line, point. By definition, a face is a bounded portion of a surface, named the supporting surface. An edge is a bounded portion of a curve, named the supporting curve. A vertex is a point in 3D space. They are related to each other as follows. The bounded portion of a curve is defined by two points (the vertices) lying on the curve. The bounded portion of a surface is defined by its boundary, this boundary being a set of edges lying on the surface. The boundary of the edges of the face are connected by sharing vertices. Faces are connected by sharing edges. Two faces are adjacent if they share an edge. Similarly, two edges are adjacent if they share a vertex. In the CAD system, the B-Rep gathers in an appropriate data structure the "is bounded by" relationship, the relationship between topological entities and supporting geometries, and mathematical descriptions of supporting geometries. An internal edge of a B-Rep is an edge shared by exactly two faces. By definition, a boundary edge is not shared, it bounds only one face. By definition, a boundary face is bounded by at least one boundary edge. A B-Rep is said to be closed if all its edges are internal edges. A B-Rep is said to be open is it includes at least one boundary edge. A closed B-Rep is used to model a thick 3D volume because it defines the inside portion of space (virtually) enclosing material. An open B-Rep is used to model a 3D skin, which represents a 3D object the thickness of which is sufficiently small to be ignored.

A key advantage of the B-Rep over any other representation types used in CAD modeling is its ability to represent arbitrary shapes exactly. All other representations in use, such as point clouds, distance fields and meshes, perform an approximation of the shape to represent by discretization. The B-Rep, on the other hand, contains surface equations that represent the exact design and therefore constitutes a true "master model" for further manufacturing, whether this be generation of toolpaths for CNC, or discretizing into the correct sample density for a given 3D Printer technology. In other words, by using a B-Rep, the 3D model may be an exact representation of the manufactured object. The B-Rep is also advantageous for simulating the behavior of a 3D model. In terms of stress, thermal, electromagnetic or other analysis, it supports local refinement of the simulation meshes to capture physical phenomena, and for kinematics it supports true contact modeling between curved surfaces. Finally, a B-Rep allows a small memory and/or file footprint. First, because the representation contains surfaces based only on parameters. In other representations such as meshes, the equivalent surface comprises up to thousands of triangles. Second, because a B-Rep doesn't contain any history-based information.

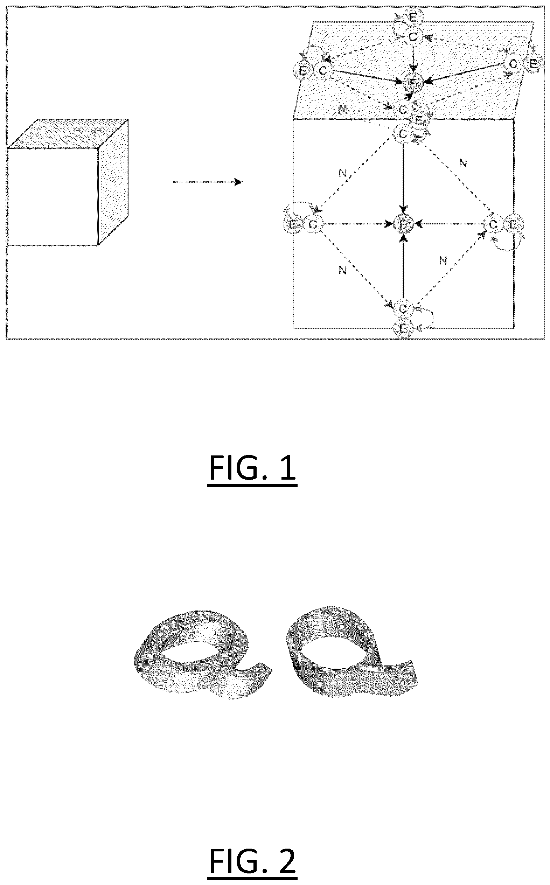

Besides vertices, faces and edges, each B-rep herein also comprises co-edges. A co-edge is an oriented edge, i.e. an edge of the B-rep with additional orientation information. The co-edges thereby define an ordering around the B-rep faces and the faces adjacency, i.e. they define the topology of the B-rep. The co-edges link the B-rep entities altogether. Each co-edge has one parent face (i.e. the face for which it defines a bound), one parent edge, (i.e. by definition a co-edge is an oriented edge and thus has a parent edge), one mate co-edge which is the co-edge having the same parent edge, one next co-edge, corresponding to the next co-edge in the loop where the co-edge belongs, and one previous co-edge, corresponding to the previous co-edge in the loop where the co-edge belongs. Each co-edge maintains an adjacency relationship with the next and previous co-edge around its parent face, the mating co-edge on the adjacent face, the parent face and the parent edge. FIG. 1 illustrates an example of co-edge interactions with other entities for two faces of a cube (F: Face, E: Edge, C: co-edge, N: Next interaction, M: Mate Interaction, PF: Parent Face, PE: Parent Edge).

Each B-rep graph herein is a graph representation of a respective B-rep and comprises graph nodes and graph edges. Each graph node represents a respective edge, a respective face or a respective co-edge of the respective B-rep. This means that for each edge of the B-rep, there is a respective graph node, for each face of the B-rep, there is a respective graph node, and for each co-edge of the B-rep, there is a respective graph node. Each graph node further comprises a geometrical and/or topological feature associated with (i.e. attached to) the graph nodes. The feature is data, for example a vector (also referred to as feature vector), associated with the node and describing geometrical data and/or topological data characterizing the B-rep element represented by the graph nodes. Table 1 below shows, for each B-rep-entity (edge, co-edge or face), the list of names of the geometrical and/or topological elements comprised in the feature vector attached to the corresponding graph nodes according to examples of the method, with for each geometrical and/or topological element a description of the element. The numbers between parentheses indicate the dimension of the corresponding vector.

*Table 1* : *example of geometrical and/or topological feature vector*

| Entity | Name | Description |
| --- | --- | --- |
| Edge (15) | Type of Geometry (5) | One-hot vector indicating the type of Edge (Line, Circle, Ellipse, B-Spline, Intersection Curve) |
| | Close Loop (1) | Boolean set to True if the Edge bounds a Face on its own |
| | Line Length (1) | Length of the Line (0 if not a Line) |
| | Circle Radius (1) | Radius of the circle edge (0 if not a circle) |
| | Ellipse Axis (2) | Semi-major and Semi-minor Ellipse axis (0 if not an Ellipse) |
| | Plane-to-Plane convexity (3) | In the case of an Edge between two Planes, indicates if the Edge is concave or convex |
| | B-Spline degree & Control Points (2) | If the Edge is a B-Spline, the degree and the number of control points that controls the B-Spline |
| Coedge (1) | Direction Flag (1) | Indicates if the coedge has the same orientation that its parent Edge |
| Face (8) | Kind of geometry (5) | One-hot vector indicating the type of Face (Plane, Sphere, Cylinder, There, B-Spline) |
| | B-Spline degrees & Control Points (3) | If the Face is a B-Spline, the degree (in both parametric dimension u and v) and the number of control points |

The features in the above example illustrated by Table 1 are invariant to rotation and translation of the CAD model. FIG. 2 illustrates the disentanglement of geometric and topological features, showing two B-rep models that are geometrically very similar, while being topologically very different.

The graph also comprises graph edges. Each respective graph edge connects two respective graph nodes, a respective first node and a respective second node. The first graph node represents a respective co-edge. The second graph node represents one of:

- a face associated with the respective co-edge (i.e. the parent face of the co-edge, that is the face for which it defines a bound),
- an edge (i.e. the parent edge of the co-edge),
- an adjacent co-edge (i.e. the next or previous co-edge, that is the next or previous co-edge in the loop where the co-edge belongs), or
- a mating co-edge (i.e. the co-edge having the same parent edge).

Obtaining the training dataset may comprise creating the training dataset, that is creating or generating the B-rep graphs. Creating/generating the B-rep graphs may comprise:

- obtaining (e.g. retrieving or downloading from a (e.g. distant) memory or server or B-rep database) B-reps encoded as B-rep files (e.g. of already designed CAD models), which may be STEP files;
- converting (by any known method) the B-rep files into initial B-rep graphs where the graph nodes are the topological components of the B-rep and the edges represent the interactions between them;
- extracting geometric parameters from the B-rep files and computing the topological and/or geometrical features; and
- integrating the computed features to the initial B-rep graphs, thereby forming the B-rep graphs of the training dataset.

Obtaining the training dataset may alternatively comprise retrieving or downloading from a (e.g. distant) memory or server or database the B-rep graphs.

Regardless of whether the method generates the B-rep-graphs of the training dataset or retrieves them, these graphs (or the initial B-rep graphs discussed later) may represent B-reps from the PartSupply dataset and may in implementations stem from 170000 STEP files from the dataset. Furthermore, the training dataset may be unlabeled.

Further to the obtaining of the training dataset, the method then comprises the learning of the local Deep CAD neural network based on the training dataset. Learning means that the method feeds B-rep graphs of the training dataset as input to the neural network and modifies the weights of the neural network as long as the neural network does not output sufficiently satisfactory outputs (e.g. with respect to a suitable convergence criterion, e.g. with respect to a loss optimization as discussed hereinafter). The output of the neural network is, for an input B-rep graph, and for each element (i.e. edge, face, and co-edge) of the B-rep represented by the input B-rep graph, a local topological signature of the element. Each local topological signature is an embedding vector that the neural network outputs for a respective element represented by a respective node of the input B-rep and that captures, for the respective B-rep element to which it pertains, the topology of that element.

The local Deep CAD neural network is a Deep Neural Network, also referred to as DNN. DNNs are a powerful set of techniques for learning in Neural Networks which is a biologically inspired programming paradigm enabling a computer to learn from observational data. In object recognition, the success of DNNs is attributed to their ability to learn rich midlevel media representations as opposed to hand-designed low-level features (Zernike moments, HOG, Bag-of-Words, SIFT, etc.) used in other methods (min-cut, SVM, Boosting, Random Forest, etc.). More specifically, DNNs are focused on end-to-end learning based on raw data. In other words, they move away from feature engineering to a maximal extent possible, by accomplishing an end-to-end optimization starting with raw features and ending in labels. DNN's are discussed in reference D. E. Rumelhart, G. E. Hinton, R. J. Williams, "Learning internal representations by error propagation, Parallel distributed processing: explorations in the microstructure of cognition", vol. 1: foundations, MIT Press, Cambridge, MA, 1986, which is incorporated herein by reference.

The local Deep CAD neural network may have an architecture of a classical graph convolutional network, as discussed for example in reference T. N. Kipf and M. Welling, "Semi-Supervised Classification with Graph Convolutional Networks", 2016, which is incorporated herein by reference. Such an architecture is particularly adapted since the input data of the local Deep CAD neural network is a graph. The standard objective of such models is to compute an embedding vector for each node of the graph. These models are usually based on message passing: in order to compute an embedding vector to describe the node of the graph, each node will gather the previous feature vector from its neighborhood and pass it to a deep learning network. The local Deep CAD neural network architecture may specifically be that proposed in reference J. G. Lambourne, K. D. Willis, P. K. Jayaraman, A. Sanghi, P. Meltzer and H. Shayani, "B-RepNet: A topological message passing system for solid models" CVPR 2021, which is incorporated herein by reference: a deep learning model based on the same principles as classical graph convolutional network (as discussed in previously-cited reference T. N. Kipf and M. Welling, "Semi-Supervised Classification with Graph Convolutional Networks", 2016), but with a message passing based on the topological interaction of co-edges.

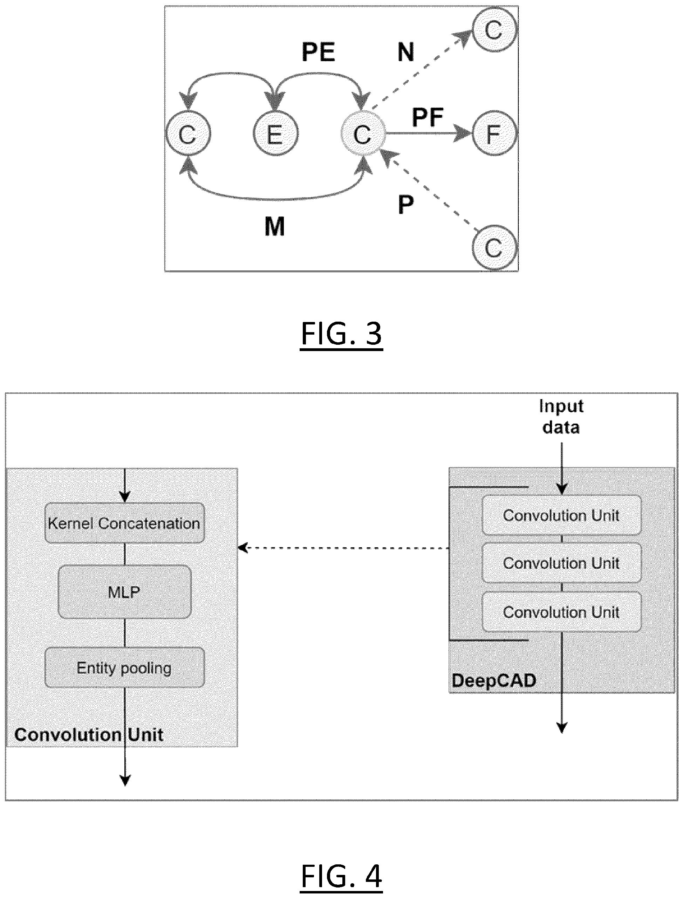

The local Deep CAD neural network may comprise a convolution unit, which is a layer of the neural network in which the message passing occurs. The convolution unit is configured to perform a kernel concatenation. The kernel concatenation concatenates a feature vector of each co-edge with the feature vectors of its neighboring B-rep elements according to a kernel of the neural network. As known *per se* in the field of Machine-Learning, the kernel is a specified walk according to which the neural network concatenates the features of the input, the features being here the topological and/or geometrical features. The kernel concatenates the feature of each co-edge with the features of its neighborhood according to this walk. The kernel walk may be a combination of the five following elementary walk operations: next co-edge, previous co-edge, mate co-edge, parent face, and parent edge. FIG. 3 illustrates these operations (PE: parent edge, PF: parent face, N: next, P: previous, M: mate, C: co-edge, E: edge, F: face). The last two walk operations are terminative since they end up on an entity that is not a co-edge. The kernel may be {*I, N, P, M, PE, PF*} (I being the identity), *i.e.* each co-edge will concatenate its current feature vector with the current feature vector of the next co-edge, the previous co-edge, the mate co-edge, the parent edge and the parent face, resulting in the following concatenated feature vector (for each co-edge c):

$$\phi_c^{(i)} = \left[ X_c^{(i)} \middle| X_N^{(i)} \middle| X_P^{(i)} \middle| X_M^{(i)} \middle| X_{PE}^{(i)} \middle| X_{PF}^{(i)} \middle| \right]$$

where $X_k^{(i)}$ is the feature vector of the entity k at the step i.

The convolution unit may be further configured to pass each concatenated feature vector of a co-edge resulting from the kernel concatenation as input to a dense neural network. The dense neural network is a deep neural network which is a Multi-Layer Perception (MLP). The dense network may output (for each co-edge c):

$$\psi_c^{(i)} = MLP\left(\phi_c^{(i)}\right) = [ \psi_{CC}^{(i)} \middle| \psi_{CF}^{(i)} \middle| \psi_{CE}^{(i)} ]$$

where $\psi_{CC}^{(i)}, \psi_{CF}^{(i)}, \psi_{CE}^{(i)}$ have the same dimension h such that the dimension of $\psi_c^{(i)}$ is 3*h.

The convolution unit may be further configured to compute, for each vector outputted by the dense neural network for an input concatenated feature vector of a co-edge, a new edge feature vector, a new face feature vector, and a new co-edge feature vector. For example, the dense neural network may output, for an input concatenated feature vector $\phi_c^{(i)}$ of a co-edge c resulting from the kernel concatenation:

$$\psi_c^{(i)} = MLP\left(\phi_c^{(i)}\right) = \left[ \psi_{CC}^{(i)} \middle| \psi_{CF}^{(i)} \middle| \psi_{CE}^{(i)} \right],$$

where $\psi_{CC}^{(i)}, \psi_{CF}^{(i)}, \psi_{CE}^{(i)}$ have the same dimension h such that the dimension of $\psi_c^{(i)}$ is 3*h. Then the new feature vectors for each co-edge c, each face F, and each edge E, may be

$$\begin{cases} X_c^{(i+1)} = \psi_{CC}^{(i)} \\ X_E^{(i+1)} = MaxPool(\psi_{CE1}^{(i)}, \psi_{CE2}^{(i)}) \\ X_F^{(i+1)} = MaxPool(\psi_{CF1}^{(i)}, \dots, \psi_{CFk}^{(i)}) \end{cases}$$

where:

- $X_c^{(i+1)}$ is the computed new co-edge feature for the output $\psi_c^{(i)}$ of the dense neural network for co-edge c;

- $X_E^{(i+1)}$ is the computed new edge feature for edge E where $\psi_{CE1}^{(i)}$ and $\psi_{CE2}^{(i)}$ correspond to the feature vectors of its two associated co-edges;

- $X_F^{(i+1)}$ is the computed new face feature for face F where $\psi_{CF1}^{(i)}, ..., \psi_{CFk}^{(i)}$ correspond to the features of its $k$ associated co-edges.

The computation of the new feature vectors may be referred to as "Entity Pooling" since this computation pools the feature vectors previously computed (i.e. at the co-edge level) to obtain the new features of the face, edge and co-edge entities. The fact that this computation separates the intermediate vectors used for pooling by entities helps the neural network to learn specific features for each type of entity.

At the end of the convolution unit, the output may thereby be still a graph, with a new feature vector attached to each entity. The local Deep CAD neural network may be configured to apply the convolution unit repeatedly a predetermined number of times, for example at least one time (e.g. exactly one time), for example at least two times (e.g. exactly two times), for example at least three times ((e.g. exactly three times). The method may in other words stack several convolutional units one after another. Just like stacking convolutional layers in computer vision increase the receptive field of the model, stacking the convolutional unit helps each co-edge to see a larger portion of its neighborhood and can thus help to capture more global and/or complex features.

The local Deep CAD neural network may then output all the feature vector attached to the graph that results from the application, or the applications where appropriate, of the convolution unit. These feature vectors are the local topological signatures of the elements (also referred to as entities) of the B-rep represented by the input B-rep-graph. In other words, the local Deep CAD neural network does not comprise any other unit or module on top of the convolution unit, and outputs the output of the convolution unit, or of the iteration thereof.

FIG. 4 shows an illustration of an example of a global architecture of the local Deep CAD neural network, where three convolution units are applied successively before the global pooling is performed. Each convolution unit performs the kernel concatenation, the application of the Multi-Layer Perceptron (MLP) and the entity pooling.

The learning may use a loss that is based on a distance to a modified element. This is now discussed.

Specifically, in this case, obtaining the training dataset of B-rep graphs may comprise, for each initial B-rep model of a set of initial B-rep models (the obtaining of the training dataset may comprise providing the initial B-reps as an initial step), performing one or more of the following transformations:

- Face geometry modification,
- Edge geometry modification,
- Face removal,
- Edge removal, and/or
- Pad or hole addition on a face,

Upon these transformations, the training dataset consists in pairs of B-rep graphs each including the B-rep graph of an initial B-rep and the B-rep graph of the B-rep resulting from the one or more transformations applied to the initial B-rep.

This allows to obtain a training dataset containing B-Rep models (or rather B-rep graphs thereof) with pairs of entities/elements, with a quantifiable level of similarity between the two entities' neighborhoods (since the transformation transforming one element into the other is known). For each initial B-rep, transformations of the above list may be applied to substantially 10% of the entities of the initial B-rep (for example one transformation per entity within these 10%). Obtaining the training dataset may comprise storing the pairs of entities each formed by an initial entity and its transformation. Faces and edges added or deleted may be stored alone (i.e. not in pairs).

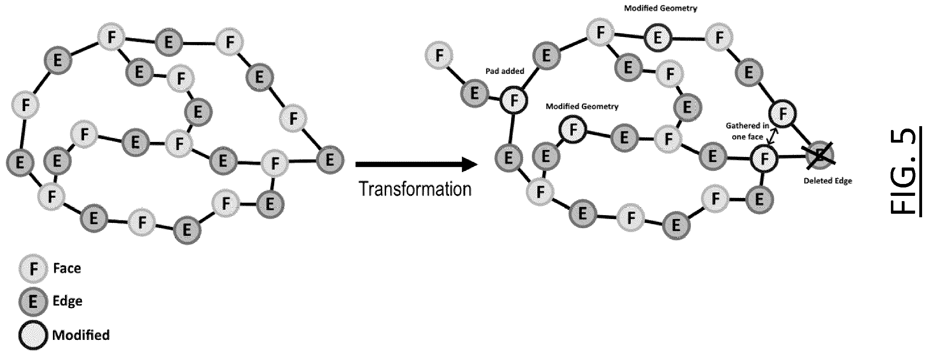

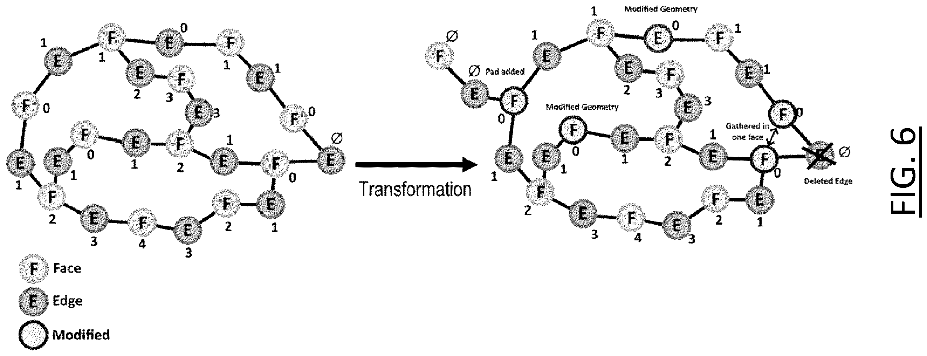

The distance to a modified element (DME) of an element/entity is a distance between that entity and the closest modified entity, that is the distance between that entity as is in the initial B-rep to which it belongs and the modified entity which is the closest in the B-rep that results from the one or more transformations applied to the initial B-rep. The distance is the length of the path between two entities in the B-rep graph of the initial B-rep. In other words, the B-rep graph of the initial B-rep (i.e. corresponding to the non-modified model), as well as the list of the features that undergo a modification, are used to compute the DME. FIG. 5 illustrates a B-rep graph of a B-rep and its transformation. FIG. 6 shows the DMEs of the entities of this B-rep.

For each pair of entities (initial entity and its transformation) of the training dataset, the obtaining of the training dataset may comprise defining the DME of the pair as the DME of the entity of the modified B-Rep (i.e. resulting from the transformation). Thereby, each training sample of the training dataset may be a triplet containing two entities and one DME, $(F, F', DME_{F/F'})$, where F is an entity from a B-Rep model $O$, and $F'$ is the same entity from the transformed B-Rep model $O_{mod}$, and $DME_{F/F'}$ the DME of F' in $O_{mod}$.

Learning the Deep CAD neural network may comprise minimizing a loss that, for pairs of elements each of an initial B-rep, penalizes:

- a discrepancy between two similarities each between a local signature outputted by the neural network for one element of the pair and a local signature outputted by the neural network for the corresponding element in the B-rep resulting from the one or more transformations applied to the initial B-rep; and
- a discrepancy between two distances each respective to one element of the pair and the corresponding element in the B-rep resulting from the one or more transformations applied to the initial B-rep and measuring a distance between said corresponding element and a closest modified element in said B-rep resulting from the one or more transformations applied to the initial B-rep.

By "penalizes a discrepancy", it is meant that the loss tends to have a high value when this discrepancy (which for example may be captured by an appropriate distance) tends to be high. As the loss is to be minimized, the training aims at avoiding or at least significantly reducing these high values.

The loss may be of the type (e.g. may be given by the below formula, for example up to a scaling):

$$loss\left(X_{F_1}^K, X_{F_1'}^K, DME_{F_1/F_1'}, X_{F_2}^K, X_{F_2'}^K, DME_{F_2/F_2'}\right)$$

$$= max(0, -sign\left(DME_{F_1/F_1'} - DME_{F_2/F_2'}\right)\left(sim\left(X_{F_1}^K, X_{F_1'}^K\right)\right.$$

$$\left. - sim\left(X_{F_2}^K, X_{F_2'}^K\right)\right) + margin\left|DME_{F_1/F_1'} - DME_{F_2/F_2'}\right|)$$

where:

- $(F_1; F_2)$ is a pair of B-rep elements $F_1$ and $F_2$ of an initial B-rep;
- $F_1'$ and $F_2'$ are the elements corresponding to $F_1$ and $F_2$, respectively, in the B-rep resulting from the one or more transformations applied to the initial B-rep;
- $DME_{F_1/F_1'}$ is the distance between $F_1'$ and a closest modified element in the B-rep resulting from the one or more transformations applied to the initial B-rep;
- $DME_{F_2/F_2'}$ is the distance between $F_2'$ and a closest modified element in the B-rep resulting from the one or more transformations applied to the initial B-rep;
- $X_{F_1}^K, X_{F_1'}^K, X_{F_2}^K$, and $X_{F_2'}^K$ are the local signatures of $F_1$, $F_1'$, $F_2$ and $F_2'$, respectively, K being the number of convolution units in the neural network;
- *margin* is a constant, for example *margin* = 0,3; and
- *sim* is a function measuring a similarity between two vectors.

The above loss allows, for a given pair of entities, if the entity on the modified B-Rep model is close to a modification, to have the cosine similarity between the pair to be low. So the lower the DME is, the lower the cosine similarity should be. In other words, if $DME_{F_1/F_1'} > DME_{F_2/F_2'}$, $F_1$, $F_1'$ are farther from a modified element than $F_2$, $F_2'$, and so $X_{F_1}^K, X_{F_1}^K$, are more similar than $X_{F_2}^K, X_{F_2'}^K$. In yet other words, the objective of the training may be expressed as

$$DME_{F_1/F_1'} > DME_{F_2/F_2'} \Leftrightarrow sim\left(X_{F_1}^K, X_{F_1'}^K\right) > sim(X_{F_2}^K, X_{F_2'}^K)$$

.

As previously explained, the distance between an element of an initial B-rep and a corresponding element in the B-rep resulting from the one or more transformations applied to the initial B-rep may be the length, in the B-rep graph of the B-rep resulting from the one or more transformations applied to the initial B-rep, of a path between the corresponding element and a closest modified element in the B-rep resulting from the one or more transformations applied to the initial B-rep.

*sim* may be the cosine similarity function, defined for two vectors *x* and y by the formula:

$$sim(x, y) = \frac{x.y}{\|x\|\|y\|} = \frac{\sum_i x_i y_i}{\sqrt{\sum_i x_i^2}\sqrt{\sum_i y_i^2}}$$

It is also provided a neural network learnable according to the learning method, that is a computer-implemented neural network data structure having the weights of a neural network learnt by the method. The provided neural network may for example have been learnt directly by the method, with its weights having been fixed by the learning step of the method.

It is also provided a method of use of the neural network. The method of use comprises obtaining a B-rep graph representing a B-rep. The method of use further comprises applying the neural network to the B-rep graph, thereby obtaining local topological signatures of elements of the B-rep.

The method of use may be for local similarity search between CAD models and for CAD object retrieval, i.e. for searching local B-rep elements (faces, edges) which are similar, either within a same B-rep or for two B-reps. Indeed, the learnt neural network generates local topological signatures from input B-Reps (CAD) objects. These local signatures embed local topological information. As such, topologically similar CAD model elements have or tend to have a high signature similarity.

The method of use may be for local topological similarity search between two CAD models. In this case, the method of use may comprise:

- providing a first B-rep graph of a first B-rep and a second B-rep graph of a second B-rep;
- applying the neural network to the first B-rep graph and to the second B-rep graph, thereby obtaining first local topological signatures each of an element of the first B-rep and second topological signatures each of an element of the second B-rep; and
- evaluating similarities between first local topological signatures and second topological signatures, for example for finding the pairs of most similar elements of the first B-rep and second B-rep or for finding the elements which are the most similar to a given element.

In the above, the first B-rep and the second B-rep may be identical, in which case the method searches for local similarity within a same B-rep.

The method of use may be for local topological similarity retrieval within a same CAD model. In this case, the method of use may comprise:

- providing a B-rep graph of a CAD model;
- applying the neural network to the B-rep graph, thereby obtaining local topological signatures each of an element of the B-rep; and
- selecting one obtained local topological signature (for example of a face), and automatically evaluating the similarity of the selected signature with each other obtained signature, thereby obtaining a topological similarity score between the element represented by said one signature (this element and/or its signature may be referred to as "the query") and each other element of the B-rep; and
- automatically selecting the elements which are the most similar to the element represented by said one signature, for example by selecting all the element for which the similarity score is above a predefined threshold or by selecting the k elements for which the similarity score is the highest, with k>0 (*e.g.* k>1).

The method of use may be for local CAD object element retrieval in a database through topological similarity search. In this case, the method of use may comprise:

- providing:

  ○ a given B-rep graph of a given B-rep;
  ○ a database of B-reps elements and/or CAD models elements (faces or edges for example) associated to these B-reps, each element in the database being associated with its local topological signature (i.e. which is already computed, e.g. which has been previously computed by using the neural network)

- applying the neural network to the given B-rep graph, thereby obtaining local signatures of the elements of the given B-rep;

- querying the database with at least one local signature of an element of the given B-rep (for example performing one or more queries each with a local signature); and
- for each element the database, evaluating the similarity between the local signature of the given B-rep element and the local signature of the element.

The above method may optionally further comprise the selection of the elements for which the similarity is the highest (e.g. the k elements with the highest similarity, with k>0, or the elements for which the similarity is above a predefined threshold).

As said above, the database of B-rep elements with their local topological signatures may stem from signature computations using the local Deep CAD neural network. In other words, it is for that provided a forming method for forming the database of B-rep elements with their local topological signatures, the method comprising:

- providing B-Reps, or B-Reps graphs thereof, for example providing the B-Reps and generating the B-Rep graphs;
- for each B-rep, applying the local Deep CAD neural network to its B-rep graph, thereby obtaining local topological signatures each of a respective element of the B-rep.

In all above examples of the method of use and of the forming method, providing a B-rep graph of a B-rep may comprise generating the B-rep graph as discussed hereinabove for the providing of the training dataset in the learning method. Providing the database may comprise obtaining the local topological signatures of at least some (e.g. all) of the models in the database, by applying the local Deep CAD neural network to these models' B-rep graphs (which the providing of the database may comprise generating). Evaluating the similarity between a signature and another signature may comprise computing the cosine similarity between the two signatures, which is also sometimes referred to as "similarity score" in the present disclosure. Since computing the similarity between two signatures is extremely fast, the result can be given to a user in a very short amount of time.

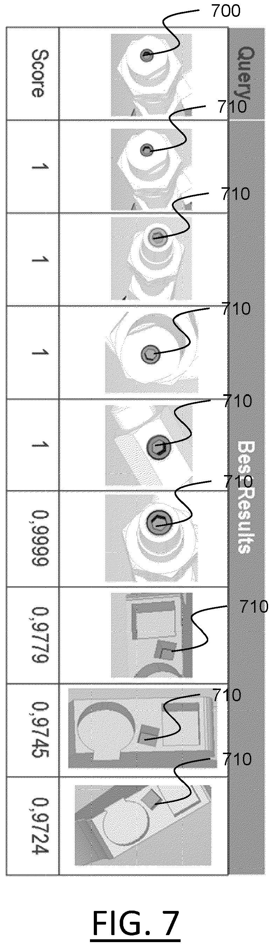

FIG. 7 illustrates the results of a query 700 with a database of 300 CAD models. The retrieved most similar elements are shown by references 710, and "score" indicates the cosine similarity.

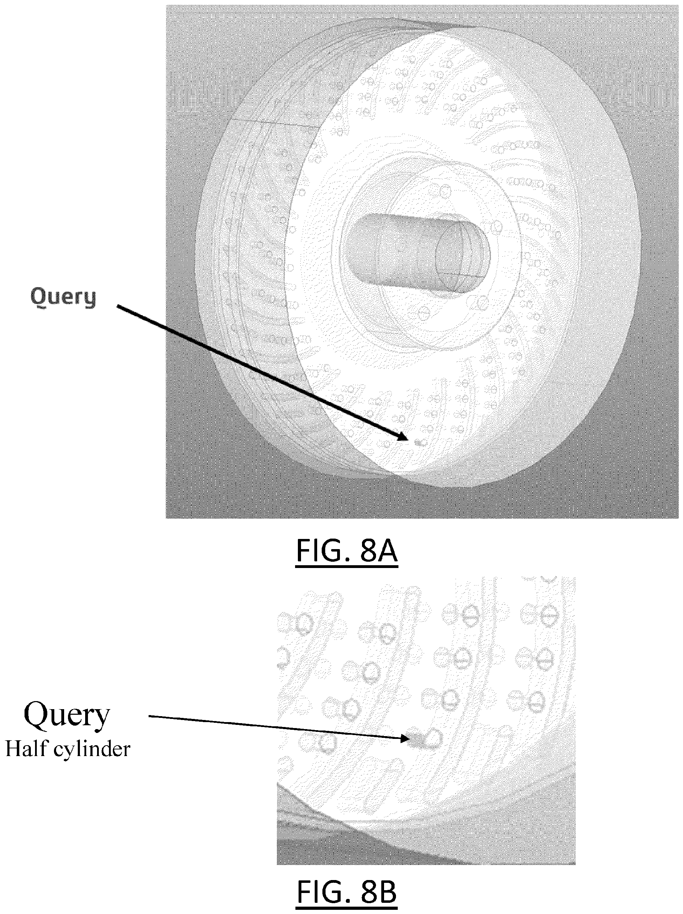

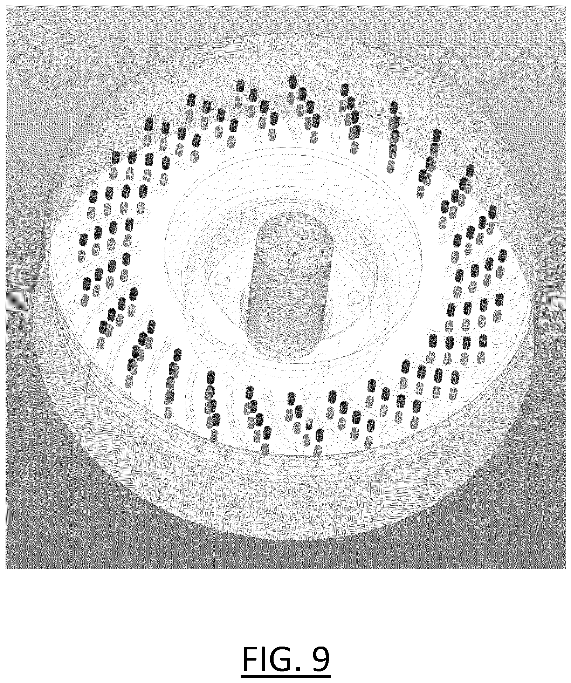

FIG.s 8A to 9 illustrate the case where the method of use is used for local topological similarity retrieval within a same CAD model, as discussed above. FIG. 8A shows a CAD model of a part from a brake assembly. A half-cylinder face is selected as the query, as shown on FIG. 8A and 8B (which corresponds to a zoom on FIG. 8A). FIG. 9 shows the selected most similar elements (i.e. the selected elements retrieved because they have a topological signature which is found to be similar to that of the query half-cylinder face). In black are shown those for which the similarity score is one and in grey those for which the similarity score is comprised (strictly) between 0.98 and 1. In white is shown all the other faces for which the score is lower than 0.85.

The learning method, the method for forming the database, and the method of use may be integrated into a same process which comprises: an offline stage including the learning method and the method for forming the database, and an online stage including the method of use. Alternatively, the method for forming the database may be part of the online stage.

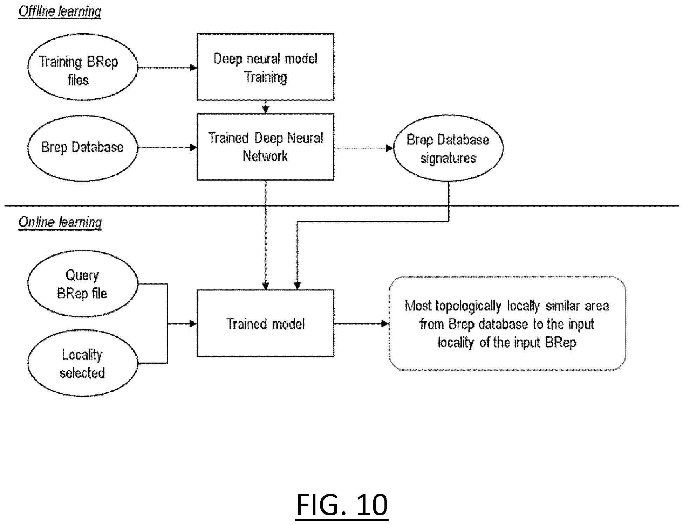

FIG. 10 shows an implementation of such process, which comprises:

- an offline stage: this stage aims at training a model using manufacturing B-Rep objects. Note that this stage may be transparent from the end user. This stage comprises:

  -- B-Rep graph generation: implementing a conversion pipeline from raw B-Rep training files to graphs where the nodes of the graph are all the topological components, and the edges represent the interactions between them. The data parsing includes geometric parameter extraction and features computation for the different components;
  -- Neural network model learning based on the training B-Rep graphs. It consists of a B-Rep Convolutional-neural-network-based model that maps each topological elements into a signature; such as more similar topological elements in terms of geometry and topology have more similar signatures. To do so, the previously discussed DME (distance to a modified element) is used to compare similarities between pairs of features;

- an online stage comprising the following: given a B-Rep file, a selected entity on the B-Rep and B-Rep database, the data is, first, pre-processed to generate the corresponding B-Rep graphs. Then, the trained model is applied to compute the signatures of input and database objects. Finally, the most similar local areas are obtained from the B-Rep in the search database to the Input B-Rep selected topological entity (face or edge) in terms of signatures similarities (distances).

**EP 4 535 213 A1**

The methods are computer-implemented. This means that steps (or substantially all the steps) of the methods are executed by at least one computer, or any system alike. Thus, steps of the methods are performed by the computer, possibly fully automatically, or, semi-automatically. In examples, the triggering of at least some of the steps of the method may be performed through user-computer interaction. The level of user-computer interaction required may depend on the level of automatism foreseen and put in balance with the need to implement user's wishes. In examples, this level may be user-defined and/or pre-defined.

A typical example of computer-implementation of a method is to perform the method with a system adapted for this purpose. The system may comprise a processor coupled to a memory and a graphical user interface (GUI), the memory having recorded thereon a computer program comprising instructions for performing the method. The memory may also store a database. The memory is any hardware adapted for such storage, possibly comprising several physical distinct parts (e.g. one for the program, and possibly one for the database).

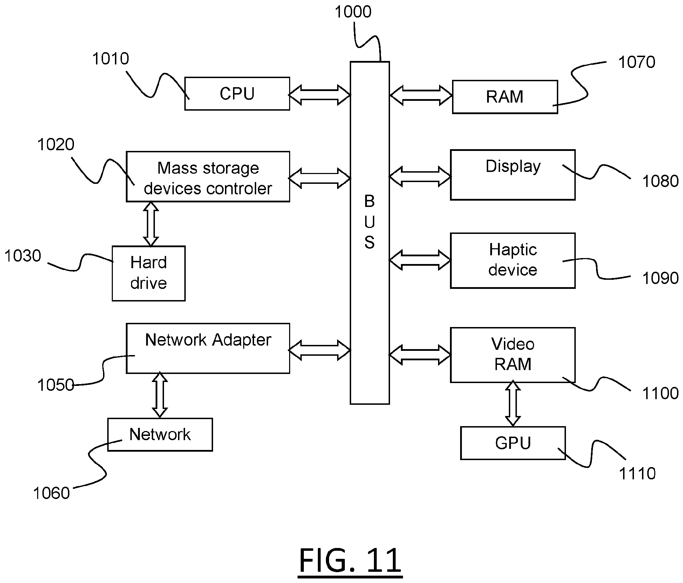

FIG. 11 shows an example of the system, wherein the system is a client computer system, e.g. a workstation of a user.

The client computer of the example comprises a central processing unit (CPU) 1010 connected to an internal communication BUS 1000, a random-access memory (RAM) 1070 also connected to the BUS. The client computer is further provided with a graphical processing unit (GPU) 1110 which is associated with a video random access memory 1100 connected to the BUS. Video RAM 1100 is also known in the art as frame buffer. A mass storage device controller 1020 manages accesses to a mass memory device, such as hard drive 1030. Mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; magneto-optical disks. Any of the foregoing may be supplemented by, or incorporated in, specially designed ASICs (application-specific integrated circuits). A network adapter 1050 manages accesses to a network 1060. The client computer may also include a haptic device 1090 such as cursor control device, a keyboard or the like. A cursor control device is used in the client computer to permit the user to selectively position a cursor at any desired location on display 1080. In addition, the cursor control device allows the user to select various commands, and input control signals. The cursor control device includes a number of signal generation devices for input control signals to system. Typically, a cursor control device may be a mouse, the button of the mouse being used to generate the signals. Alternatively or additionally, the client computer system may comprise a sensitive pad, and/or a sensitive screen.

The computer program may comprise instructions executable by a computer, the instructions comprising means for causing the above system to perform the method. The program may be recordable on any data storage medium, including the memory of the system. The program may for example be implemented in digital electronic circuitry, or in computer hardware, firmware, software, or in combinations of them. The program may be implemented as an apparatus, for example a product tangibly embodied in a machine-readable storage device for execution by a programmable processor. Method steps may be performed by a programmable processor executing a program of instructions to perform functions of the method by operating on input data and generating output. The processor may thus be programmable and coupled to receive data and instructions from, and to transmit data and instructions to, a data storage system, at least one input device, and at least one output device. The application program may be implemented in a high-level procedural or object-oriented programming language, or in assembly or machine language if desired. In any case, the language may be a compiled or interpreted language. The program may be a full installation program or an update program. Application of the program on the system results in any case in instructions for performing the method. The computer program may alternatively be stored and executed on a server of a cloud computing environment, the server being in communication across a network with one or more clients. In such a case a processing unit executes the instructions comprised by the program, thereby causing the method to be performed on the cloud computing environment.

**Claims**

1. A computer-implemented method of machine-learning, the method comprising:

    - obtaining a training dataset of B-rep graphs, each B-rep graph representing a respective B-rep and comprising:

        ◦ graph nodes each representing an edge, a face or a co-edge of the respective B-rep and being associated with one or more geometrical and/or topological features; and
        ◦ graph edges each between a respective first graph node representing a respective co-edge and a respective second graph node representing a face, an edge, an adjacent co-edge, or a mating co-edge associated with the respective co-edge; and

    - learning, based on the training dataset, a local Deep CAD neural network configured to take as input a B-rep graph and to output, for each graph node of the input B-rep graph, a local topological signature of the B-rep element represented by the graph node.

2. The method of claim 1, wherein obtaining the training dataset of B-rep graphs comprises:

- for each initial B-rep model of a set of initial B-rep models, performing one or more of the following transformations:

  ◦ Face geometry modification,
  ◦ Edge geometry modification,
  ◦ Face removal,
  ◦ Edge removal, and/or
  ◦ Pad or hole addition on a face,

the training dataset consisting in pairs of B-rep graphs each including the B-rep graph of an initial B-rep and the B-rep graph of the B-rep resulting from the one or more transformations applied to the initial B-rep, and wherein learning the Deep CAD neural network comprises minimizing a loss that, for pairs of elements each of an initial B-rep, penalizes:

  - a discrepancy between two similarities each between a local signature outputted by the neural network for one element of the pair and a local signature outputted by the neural network for the corresponding element in the B-rep resulting from the one or more transformations applied to the initial B-rep; and
  - a discrepancy between two distances each respective to one element of the pair and the corresponding element in the B-rep resulting from the one or more transformations applied to the initial B-rep and measuring a distance between said corresponding element and a closest modified element in said B-rep resulting from the one or more transformations applied to the initial B-rep.

3. The method of claim 2, wherein the loss is of the type:

$$loss\left(X_{F_1}^K, X_{F_1'}^K, DME_{F_1/F_1'}, X_{F_2}^K, X_{F_2'}^K, DME_{F_2/F_2'}\right)$$

$$= max(0, -sign(DME_{F_1/F_1'} - DME_{F_2/F_2'})\left(sim\left(X_{F_1}^K, X_{F_1'}^K\right)\right.$$

$$\left. - sim\left(X_{F_2}^K, X_{F_2'}^K\right)\right) + margin|DME_{F_1/F_1'} - DME_{F_2/F_2'}|)$$

where:

- ($F_1$; $F_2$) is a pair of B-rep elements $F_1$ and $F_2$ of an initial B-rep;
- $F_1'$ and $F_2'$ are the elements corresponding to $F_1$ and $F_2$, respectively, in the B-rep resulting from the one or more transformations applied to the initial B-rep;
- $DME_{F_1/F_1'}$ is the distance between $F_1'$ and a closest modified element in the B-rep resulting from the one or more transformations applied to the initial B-rep;
- $DME_{F_2/F_2'}$ is the distance between $F_2'$ and a closest modified element in the B-rep resulting from the one or more transformations applied to the initial B-rep;
- $X_{F_1}^K, X_{F_1'}^K, X_{F_2}^K$, and $X_{F_2'}^K$ are the local signatures of $F_1$, $F_1'$, $F_2$ and $F_2'$, respectively;
- *margin* is a constant; and
- *sim* is a function measuring a similarity between two vectors.

4. The method of claim 3, wherein *sim* is the cosine similarity function.

5. The method of any one of claims 2 to 4, wherein the distance between an element of an initial B-rep and a corresponding element in the B-rep resulting from the one or more transformations applied to the initial B-rep is the length, in the B-rep graph of the B-rep resulting from the one or more transformations applied to the initial B-rep, of a path between the corresponding element and a closest modified element in the B-rep resulting from the one or more transformations applied to the initial B-rep.

6. The method of any one of claims 1 to 5, wherein the local Deep CAD neural network comprises a convolution unit that is configured to perform a kernel concatenation that concatenates a feature vector of each co-edge with the feature vectors of its neighboring B-rep elements according to a kernel of the neural network.

7. The method of claim 6, wherein the convolution unit is further configured to pass each concatenated feature vector of a co-edge resulting from the kernel concatenation as input to a dense neural network.

8. The method of claim 7, wherein the convolution unit is further configured to compute, for each vector outputted by the dense neural network for an input concatenated feature vector of a co-edge, a new edge feature vector, a new face feature vector, and a new co-edge feature vector.

9. The method of claim 8, wherein the dense neural network outputs, for an input concatenated feature vector $\phi_c{}^{(i)}$ of a co-edge c resulting from the kernel concatenation:

$$\psi_c^{(i)} = MLP\left(\phi_c^{(i)}\right) = \left[\ \psi_{CC}^{(i)}\middle|\psi_{CF}^{(i)}\middle|\psi_{CE}^{(i)}\ \right],$$

where $\psi_{CC}^{(i)}, \psi_{CF}^{(i)}, \psi_{CE}^{(i)}$ have the same dimension h such that the dimension of $\psi_c^{(i)}$ is 3*h, and wherein each co-edge c, each face F, and each edge F, the new feature vectors are,

$$\begin{cases} X_c^{(i+1)} = \psi_{CC}^{(i)} \\ X_E^{(i+1)} = MaxPool(\psi_{CE1}^{(i)}, \psi_{CE2}^{(i)}) \\ X_F^{(i+1)} = MaxPool(\psi_{CF1}^{(i)}, \dots, \psi_{CFk}^{(i)}) \end{cases}$$

where:

- $X_c^{(i+1)}$ is the computed new co-edge feature for the output $\psi_c^{(i)}$ of the dense neural network for co-edge c;

- $X_E^{(i+1)}$ is the computed new edge feature for edge F where $\psi_{CE1}^{(i)}$ *and* $\psi_{CE2}^{(i)}$ correspond to the feature vectors of its two associated co-edges;

- $X_F^{(i+1)}$ is the computed new face feature for face F where $\psi_{CF1}^{(i)}, \dots, \psi_{CFk}^{(i)}$ correspond to the features of its *k* associated co-edges.

10. The method of claims 6 or 9, wherein the local Deep CAD neural network is configured to apply the convolution unit repeatedly a predetermined number of times.

11. A neural network learnable according to the method of any one of claims 1 to 10.

12. A method of use of a neural network according to claim 11, the method of use comprising:

- obtaining a B-rep graph representing a B-rep;
- applying the neural network to the B-rep graph, thereby obtaining local topological signatures of elements of the B-rep.

**13.** A computer program comprising instructions which, when executed on a computer, cause the computer to perform the method of any one of claims 1 to 10 and/or the method of claim 12.

**14.** A computer-readable data storage medium having recorded thereon the computer program of claim 13 and/or the neural network of claim 11.

**15.** A computer system comprising a processor coupled to a memory, the memory having recorded thereon the computer program of claim 13 and/or the neural network of claim 11.

# FIG. 1

# FIG. 2

FIG. 3

FIG. 4

FIG. 5

FIG. 6

FIG. 7

FIG. 8A

FIG. 8B

FIG. 9

_Offline learning_

Training BRep files → Deep neural model Training

Brep Database → Trained Deep Neural Network → Brep Database signatures

_Online learning_

Query BRep file

Locality selected

→ Trained model → Most topologically locally similar area from Brep database to the input locality of the input BRep

# FIG. 10

FIG. 11

# EUROPEAN SEARCH REPORT

| | | Application Number |
| --- | --- | --- |
| | | EP 23 30 6709 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| A | THOMAS FUNKHOUSER ET AL: "Shape-based retrieval and analysis of 3D models", 20040808; 1077952576 - 1077952576, 8 August 2004 (2004-08-08), pages 16-es, XP058167702, DOI: 10.1145/1103900.1103916 * Sections 3.1.1 and 3.2.1; page 69 - page 70 * * Syllabus; page 2 - page 4 * | 1-15 | INV. G06F30/12 G06F30/27 G06N3/08 G06V10/82 |
| X | JAYARAMAN PRADEEP KUMAR ET AL: "UV-Net: Learning from Boundary Representations", 2021 IEEE/CVF CONFERENCE ON COMPUTER VISION AND PATTERN RECOGNITION (CVPR), IEEE, 20 June 2021 (2021-06-20), pages 11698-11707, XP034009257, DOI: 10.1109/CVPR46437.2021.01153 [retrieved on 2021-10-15] * Sections 1-3; figure 3 * | 1-15 | |

| TECHNICAL FIELDS SEARCHED (IPC) |
| --- |
| G06F G06V G06N |

The present search report has been drawn up for all claims

| Place of search | Date of completion of the search | Examiner |
| --- | --- | --- |
| Munich | 2 April 2024 | Ross, Christopher |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 22306233

**Non-patent literature cited in the description**

- **D. E. RUMELHART** ; **G. E. HINTON** ; **R. J. WILLIAMS**. Learning internal representations by error propagation, Parallel distributed processing: explorations in the microstructure of cognition. MIT Press, 1986, vol. 1

- **T. N. KIPF** ; **M. WELLING**. *Semi-Supervised Classification with Graph Convolutional Networks*, 2016
- **J. G. LAMBOURNE** ; **K. D. WILLIS** ; **P. K. JAYARAMAN** ; **A. SANGHI** ; **P. MELTZER** ; **H. SHAYANI**. B-RepNet: A topological message passing system for solid models. *CVPR*, 2021